## Europäisches Patentamt
## European Patent Office
## Office européen des brevets

(19)

(11) Veröffentlichungsnummer: **0 145 878**
**B1**

(12)

# EUROPÄISCHE PATENTSCHRIFT

(45) Veröffentlichungstag der Patentschrift:
**11.05.88**

(51) Int. Cl.⁴: **B 29 C 53/80**, B 65 H 75/28

(21) Anmeldenummer: **84112143.7**

(22) Anmeldetag: **10.10.84**

(54) **Vorrichtung zur Fixierung des Faserstranges bei Wickelmaschinen.**

(30) Priorität: **13.12.83  DE 3344989**

(43) Veröffentlichungstag der Anmeldung:
**26.06.85 Patentblatt 85/26**

(45) Bekanntmachung des Hinweises auf die Patenterteilung:
**11.05.88 Patentblatt 88/19**

(84) Benannte Vertragsstaaten:
**DE FR GB IT SE**

(56) Entgegenhaltungen:
**FR - A - 2 355 758**

(73) Patentinhaber: **Messerschmitt-Bölkow-Blohm Gesellschaft mit beschränkter Haftung, Robert-Koch-Strasse, D-8012 Ottobrunn (DE)**

(72) Erfinder: **Sperber, Franz, Schwarzenbergstrasse 29, D-8209 Kolbermoor (DE)**
Erfinder: **Weber, Walter, Eberhardstrasse 12, D-8017 Ebersberg (DE)**

ACTORUM AG

**Beschreibung**

Die Erfindung bezieht sich auf eine Vorrichtung zur Fixierung des freien Endes des Faserstrangs bei Beginn des Wickelns eines rohrförmigen Bauteils aus faserverstärktem Kunststoff auf einem in eine Wickelmaschine eingespannten Wickeldorn, wobei die Wickelmaschine eine parallel zum Wickeldorn hin- und herbewegliche Führungseinrichtung für den aufzuwickelnden Faserstrang aufweist.

Die Fixierung des freien Endes des Faserstrangs am Wickeldorn wird nach dem Stand der Technik gemäß DE-A-2 023 267, die die Grundlage für die Fassung des Oberbegriffs des Anspruchs 1 bildet, vor dem Wickeln manuell durchgeführt, und zwar wickelt die Bedienungsperson das freie Ende des Faserstrangs mindestens einmal über Kreuz um den Wickeldorn an einem Ende herum, so daß das freie Endstück des Faserstrangs durch die so abgelegte Windung am Kreuzungspunkt gegen den Wickeldorn gedrückt und dadurch fixiert wird.

Diese Art der Fixierung erfordert jedoch bei der serienmäßigen Herstellung derartiger Bauteile eine zusätzliche Arbeitskraft. Auch ist sie zeitaufwendig und daher mit einem relativ langen Stillstand der Wickelmaschine bzw. des betreffenden Wickeldorns der Wickelmaschine verbunden.

Der Erfindung, wie sie in den Ansprüchen gekennzeichnet ist, liegt daher die Aufgabe zugrunde, bei einer Wickelmaschine zur serienmäßigen Herstellung von rohrförmigen gewickelten Bauteilen eine Vorrichtung zu schaffen, mit der der Faserstrang vor dem Wickeln automatisch am Wickeldorn befestigt und nach dem Wickeln vom Wickeldorn abgetrennt wird.

Nachstehend ist eine Wickelmaschine mit der erfindungsgemäßen Vorrichtung anhand der Zeichnung beispielsweise erläutert. Darin zeigen:

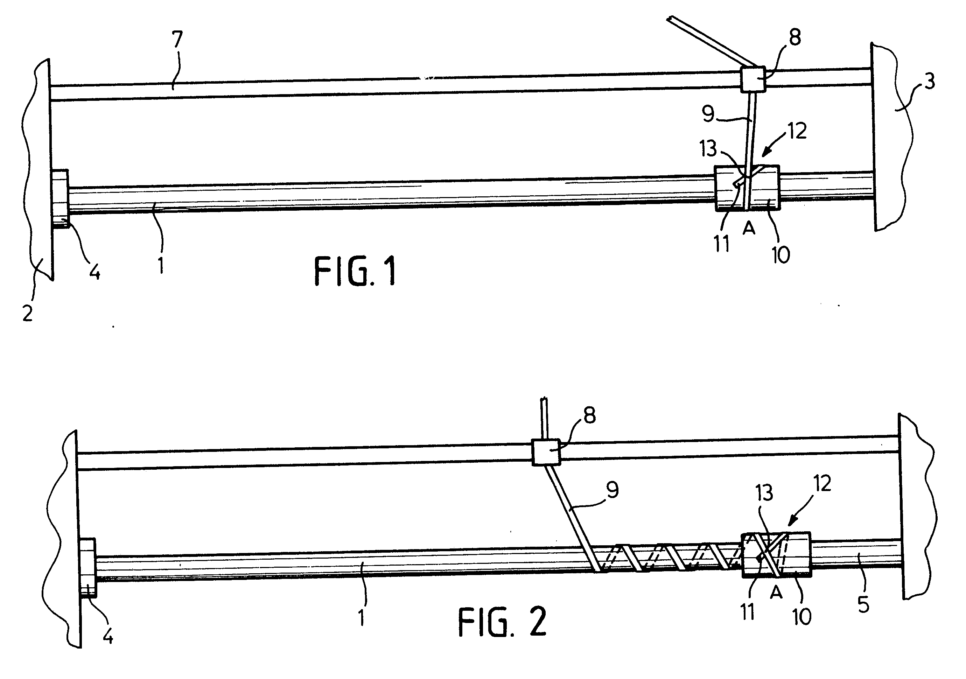

Figur 1 bis 4 schematisch eine Wickelmaschine in der Draufsicht, und zwar jeweils in einer anderen Betriebsphase der erfindungsgemäßen Vorrichtung.

Nach der Zeichnung ist ein Wickeldorn 1 in einer Wickelmaschine so gelagert, daß er um seine Längsachse drehbar ist. Mit 2 und 3 sind Teile des Maschinengestells der Wickelmaschine bezeichnet, in denen die Arbeitsspindel 4 bzw. die axial verschiebbare Spannspindel 5 drehbar gelagert sind.

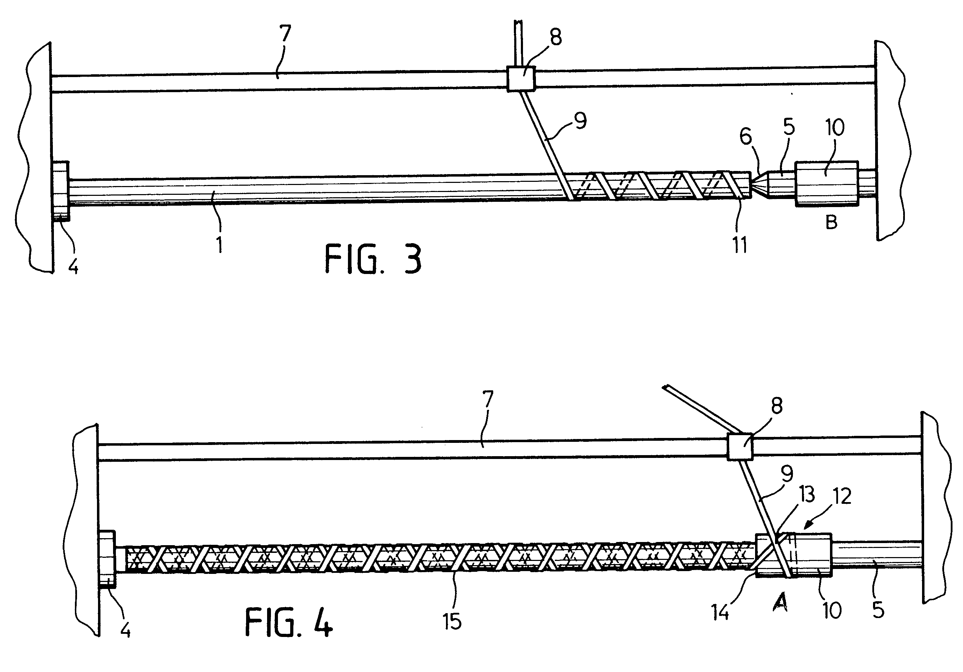

Der Wickeldorn 1 ist dabei drehfest mit der Arbeitsspindel 4 verbunden, vorzugsweise über eine Hirtverzahnung. An der Spannspindel 5 ist eine Zentrierspitze vorgesehen (Figur 3), die in eine entsprechende, nicht dargestellte kegelige Zentrierbohrung an diesem Ende des Wickeldorns 1 eingreift.

An der Vorderseite der Wickelmaschine ist eine zur Wickeldorndrehachse parallel laufende Schiene 7 angeordnet, auf der ein Schlitten 8 hin und her beweglich gelagert ist, der als Führung für den von einer nicht dargestellten Tränkeinrichtung kommenden Faserstrang 9 dient, wobei der Faserstrang 9 in der Tränkeinrichtung mit Kunstharz, vorzugsweise einem Duroplasten, wie einem Epoxydharz, getränkt worden ist.

Weiterhin ist eine Büchse 10 vorgesehen, die koaxial zum Wickeldorn 1 angeordnet ist und zwischen der in Figur 1, 2 und 4 dargestellten Position A und der in Figur 3 gezeigten Position B durch eine nicht dargestellte Einrichtung axial verschieblich ist.

In der Position A ist dabei die Büchse 10 zumindest teilweise über den benachbarten Endabschnitt des Wickeldorns 1 angeordnet, während in der Position B die Büchse 10 völlig über der Spannspindel 5 liegt.

Die Büchse 10 kann ferner über einen nicht dargestellten Antrieb in Drehbewegung versetzt werden, und zwar auch synchron zur Drehgeschwindigkeit des Wickeldorns 1 bzw. der Arbeits- und Spannspindel 4 und 5.

Weiterhin ist die Büchse 10 durch ein entsprechendes nicht dargestelltes Getriebe in einer der Drehrichtung des Wickeldorns 1 entgegengesetzten Richtung drehbar.

Mit der erfindungsgemäßen Vorrichtung ist abgesehen vom Betriebsbeginn der Wickelmaschine eine automatische Fixierung des freien Endes des Faserstrangs 9 vor jeder Bauteilwickelung gewährleistet.

Dies wird durch die nachstehend geschilderte Arbeitsweise der erfindungsgemäßen Vorrichtung verdeutlicht.

Bei Betriebsbeginn, also in der Regel bei Arbeitsbeginn, spannt die betreffende Bedienungsperson einen Wickeldorn 1 zwischen der Arbeitsspindel 4 und der Spannspindel 5 in die Wickelmaschine ein. Alsdann legt sie um die Büchse 10, die sich in Position A befindet, das freie Ende des Faserstrangs 9 wenigstens einmal kreuzweise herum, so daß das freie Endstück 11 des Faserstrangs 9 durch die abgelegte Windung 12 am Kreuzungspunkt 13 gegen die Büchse 10 gedrückt und dadurch fixiert wird (Figur 1). Durch seinen harzgetränkten Zustand ist der Faserstrang 9 mit einer derartigen Bindung im allgemeinen an der Büchse 10 ausreichend fixierbar. Alsdann wird der Wickeldorn 1 mit der Arbeitsspindel 4 in Umdrehung versetzt, desgleichen die Büchse 10, und zwar mit der gleichen Drehgeschwindigkeit wie der Wickeldorn 1 bzw. die Arbeitsspindel 4 und die Spannspindel 5. Der Schlitten 8 mit der Faserstrang-Führungseinrichtung, beispielsweise einem Auge, bewegt sich nun von der Büchse 10 weg zum antriebsspindelseitigen Ende des Wickeldorns 1, wie in Figur 2 dargestellt.

In der nächsten Phase dreht sich die Büchse 10 in der entgegengesetzten Richtung und wird von dem Wickeldorn 1 weg in die Position B über der Spannspindel 5 verschoben (Figur 3).

Durch das Rückwärtsdrehen der Büchse 10 und die Verschiebung der Büchse 10 von dem Wickeldorn 1 auf die Spannspindel 5 wird die Windung 12 mit dem freien Endabschnitt 11 des Faserstrangs 9 von der Büchse 10 auf den Wickeldorn 1 gewickelt.

Bei dem in der Zeichnung durch keine spezielle Figur veranschaulichten eigentlichen Wickelvorgang bewegt sich dann der Schlitten 8 mit der Faserstrang-Führungseinrichtung zwischen zwei vorbestimmten Endlagen hin und her, bis das gewickelte Bauteil 15 vorliegt. Während dieses eigentlichen Wickelvorgangs kann die Büchse 10 stillstehen.

Gegen Ende des eigentlichen Wickelvorgangs wird dann die Büchse 10 wieder in die Position A geschoben, in der sie zumindest teilweise über dem benachbarten Ende des Wickeldorns 1 angeordnet ist. Gleichzeitig mit dieser Verschiebung wird die Büchse 10 in Synchrondrehung mit dem Wickeldorn 1 versetzt.

Mit dem Schlitten 8 bzw. der Faserstrang-Führungseinrichtung wird nun der Faserstrang 9 zur Büchse 10 geführt und einmal um die Büchse 10 kreuzweise gelegt, wie in Figur 4 veranschaulicht.

Um den in Figur 1 dargestellten Ausgangszustand mit kreuzweise gehaltenem Faserstrangendstück 11 zu erreichen, braucht nun lediglich noch der Faserstrang 9 zwischen der Büchse 10 und dem Wickeldorn 1 durchtrennt zu werden.

Dies kann beispielsweise dadurch erreicht werden, daß die dem Wickeldorn 1 zugewandte Außenumfangskante 14 der Büchse 10, auf der der Faserstrang 9 liegt, als scharfe Kante ausgebildet wird. Bleibt nämlich dann in der in Figur 4 gezeigten Position die Büchse 10 stehen, während der Wickeldorn 1 weiterdreht, wird der Faserstrang 9 durch diese scharfe Außenkante 14 durchtrennt.

Stattdessen ist es möglich, ein anderes Schneidwerkzeug, beispielsweise ein Messer oder eine Schere, vorzusehen, das mit seiner Schneidekante in eine Stellung zwischen der Büchse 10 und dem Wickeldorn 1 bewegbar ist.

## Patentansprüche

1. Vorrichtung zur Fixierung des freien Endes des Faserstrangs bei Beginn des Wickelns eines rohrförmigen Bauteils aus faserverstärktem Kunststoff auf einem in einer Wickelmaschine eingespannten Wickeldorn, wobei die Wickelmaschine eine parallel zum Wickeldorn hin- und herbewegliche Führungseinrichtung für den aufzuwickelnden Faserstrang aufweist, dadurch gekennzeichnet, daß zur Aufnahme des freien Endes (11, 12) des Faserstrangs (9) bei Beginn des Wickelns eine zum Wickeldorn (1) koaxiale Büchse (10) vorgesehen ist, die zumindest teilweise über ein Ende des Wickeldorns (1) verschiebbar und mit der Drehgeschwindigkeit des Wickeldorns (1) synchron drehbar ist.

2. Vorrichtung nach Anspruch 1, dadurch gekennzeichnet, daß die Büchse (10) in beiden Richtungen und synchron zum Wickeldorn (1) drehbar ist.

3. Vorrichtung nach Anspruch 1 oder 2, dadurch gekennzeichnet, daß eine Faserstrang-Schneideinrichtung am wickeldornseitigen Ende der Büchse (10) vorgesehen ist.

4. Vorrichtung nach Anspruch 3, dadurch gekennzeichnet, daß die Schneideinrichtung durch eine scharfe Kante (14) am wickeldornseitigen Ende der Büchse (10) gebildet ist.

5. Vorrichtung nach Anspruch 3, dadurch gekennzeichnet, daß die Schneideinrichtung durch ein radial zur Büchse (10) bewegbares Schneidwerkzeug gebildet wird.

## Claims

1. Means for fixing the free end of the fibre strand at the start of the winding of a tubular component part made of fibre-reinforced plastics material on a winding mandrel which is clamped into a winding machine, in which respect the winding machine has a guide mechanism movable to and fro parallel to the winding mandrel, for the fibre strand that is to be wound on, characterised in that provided for the reception of the free end (11, 12) of the fibre strand (9) at the start of the winding is a sleeve (10) which is coaxial with the winding mandrel (1) and which is displaceable at least to some extend along one end of the winding mandrel (1) and is rotatable in synchronism with the speed of rotation of the winding mandrel (1).

2. Device according to claim 1, characterised in that the sleeve (10) is rotatable in both directions and in synchronism with the winding mandrel (1).

3. Device according to claim 1 or 2, characterised in that a fibre-strand cutting mechanism is provided at the winding-mandrel-side end of the sleeve (10).

4. Device according to claim 3, characterised in that the cutting mechanism is formed by a sharp edge (14) at the winding-mandrel-side end of the sleeve (10).

5. Device according to claim 3, characterised in that the cutting mechanism is formed by a cutting tool which is movable radially with regard to the sleeve (10).

## Revendications

1. Dispositif de fixation de l'extrémité libre de la mèche de fibres sur un mandrin de bobinage monté sur une bobineuse, au début du bobinage d'une pièce tubulaire en matière plastique renforcée par fibres, la bobineuse présentant pour la mèche de fibres à bobiner un dispositif de guidage qui effectue un mouvement de va-et-vient parallèlement au mandrin de bobinage, caractérisé en ce que, pour recevoir l'extrémité libre (11, 12) de la mèche de fibres (9) au début du bobinage, il est prévu une douille (10) qui est coaxiale au mandrin de bobinage (1), qui peut être engagée au moins partiellement sur une extrémité du mandrin de bobinage (1) et qui peut être entraînée en rotation de façon synchrone avec la vitesse de rotation du mandrin de bobinage (1).

2. Dispositif selon la revendication 1, caractérisé en ce que la douille (10) peut être entraînée en rotation dans les deux sens et de manière synchrone par rapport au mandrin de bobinage (1).

3. Dispositif selon la revendication 1 ou 2, caractérisé en ce qu'il est prévu un dispositif de coupe pour la mèche de fibres à l'extrémité de la douille (10) côté mandrin de bobinage.

4. Dispositif selon la revendication 3, caractérisé en ce que le dispositif de coupe est formé par une arête vive (14) sur l'extrémité de la douille (10) côté mandrin de bobinage.

5. Dispositif selon la revendication 3, caractérisé en ce que le dispositif de coupe est formé par un outil de coupe pouvant être déplacé radialement par rapport à la douille (10).

FIG. 1

FIG. 2

0 145 878

FIG. 3

FIG. 4